# EUROPEAN PATENT SPECIFICATION

(11) **EP 3 322 187 B1**
(45) Date of publication and mention of the grant of the patent: **29.01.2020**
(21) Application number: 16306474.4
(22) Date of filing: 10.11.2016
(51) Int. Cl.: H04N 21/2343, H04N 19/51, H04N 19/40

(54) **METHOD AND TRANSCODER FOR VIDEO TRANSCODING**
VERFAHREN UND TRANSCODER ZUR VIDEOTRANSCODIERUNG
PROCÉDÉS ET TRANSCODEUR DE TRANSCODAGE VIDÉO

(43) Date of publication of application: 16.05.2018
(73) Proprietor: Alcatel Lucent, 91620 Nozay (FR)
(72) Inventor: RONDAO ALFACE, Patrice, 2018 Antwerpen (BE); STEVENS, Christoph, 2018 Antwerpen (BE)
(74) Representative: MERH-IP Matias Erny Reichl Hoffmann Patentanwälte PartG mbB

(56) References cited:
- EP-A2- 1 137 289
- US-A1- 2001 047 517
- US-A1- 2013 343 450
- US-A1- 2016 105 675
- US-A1- 2016 212 438
- US-A1- 2016 255 355
- RUSERT THOMAS ET AL: "Guided just-in-time transcoding for cloud-based video platforms", 2016 IEEE INTERNATIONAL CONFERENCE ON IMAGE PROCESSING (ICIP), IEEE, 25 September 2016 (2016-09-25), pages 1489-1493, XP033016768, DOI: 10.1109/ICIP.2016.7532606
- "Guided Transcoding in a Cloud DVR", ERICSSON, no. Future_Video_Coding_Workshop_4, 21 November 2015 (2015-11-21), XP030001655,

## Description

### Field of Invention

The present invention relates to video coding. Particular embodiments relate to a method and transcoder for transcoding a video stream encoded in a reference quality into at least one other quality.

### Background

Nowadays more and more users are consuming an increasing variety of video content on a wide variety of devices. These large amounts of video content are typically delivered based on HTTP Adaptive Streaming (HAS), which leads to increasingly higher storage needs on the CDN (Content Delivery Network) side, for example on the order of petabytes or more, as each piece of video content should be stored in different resolutions and different qualities (e.g. different bitrates). Recently, 4K with HDR, 8K, and 180/360 degrees (Virtual Reality) video have been added to the already broad family of video formats present in content providers' portfolios. This may result in still larger magnitudes in terms of storage needs. Typical Video Streaming On Demand providers, for example, encode each piece of video content in up to 120 different versions, for example using different combinations of resolution, audio and video coding standard, bitrate, etc. Consequently, better compression strategies are needed to face this growing storage and delivery problem.

In the present disclosure, the archiving cost for personal copies in Cloud Digital Video Recording (Cloud DVR) applications is also addressed. User-recorded content typically becomes less popular after one week - in other words, at that time the probability that a user will watch this content in the next hours diminishes strongly. Therefore, the service provider is faced with a decision whether that content should be kept in faster, more expensive storage (e.g. circular buffers) or whether it should be moved to slower, less expensive storage (e.g. archive storage). When moved to a less expensive storage, lower-quality content versions are typically purged to save storage space - that is, only the best quality of the content is kept (wherein the "best" quality is determined according to a predefined measure, for example the version with primarily highest resolution and secondarily highest bitrate, although other measures can also be used). An instant and costly transcoding operation (called Just in Time Transcoding, JITT) may then be required when a user requests the content in a quality that is not available in the storage (in particular because it has been purged).

In the context of the present application, transcoding of video streams is to be understood as relating to converting a video stream from one encoding to another encoding.

US 2001/0047517 A1 discloses a method and apparatus for performing intelligent transcoding of multimedia data between two or more network elements in a client-server or client to-client service provision environment. Accordingly, one or more transcoding hints associated with the multimedia data may be stored at a network element and transmitted from one network elements to another. One or more capabilities associated with one of the network elements may be obtained and transcoding may be performed using the transcoding hints and the obtained capabilities in a manner suited to the capabilities of the network element. In order to make JITT an economically feasible solution, transcoding complexity should be low enough and output quality of the resulting encoded video should be high enough, while providing storage gains for archives that become larger and larger.

Intrinsic visual quality of a video is to be understood in this document as a value resulting from an objective or subjective measure of the video. Objective metrics may include but are not restricted to PSNR (Peak Signal to Noise Ratio), SAD (Sum of Absolute Differences), MSE (Mean Square Error), etc. Subjective metrics may include MOS measures (Mean Opinion Score) through subjective experiments, or measures interpolated from databases of such scores for specific content, etc.

Video quality, in this document mostly referred to as "quality", measures may comprise these "intrinsic visual quality measures", but also values of bitrate, resolution, or any combination of these.

A problem is then how to reduce the storage needs of an adaptive streaming repository, and reduce the transcoding complexity, while maintaining sufficiently high intrinsic visual quality of the output video.

Several JITT techniques are known, such as Full Transcoding, SHVC, and Control Streams.

These known JITT techniques suffer from a number of drawbacks, as will be discussed below.

The most straightforward approach, Full Transcoding, is to only store the highest quality of an adaptive streaming repository and transcode the required lower qualities on demand. While storage gains are very high (as only one quality is kept), the processing cost of transcoding requested qualities on demand is very high as full decoding, scaling and full re-encoding are needed for producing one output quality. For example, typically 5 CPU cores may be needed for transcoding on demand specific qualities from a High Definition HAS repository, for storage gains of 50%. Transcoding complexity can be controlled by a full transcoder (for example by limiting its search ranges), but with no guarantee on video output quality. In summary, Full Transcoding offers very high storage gains but very complex transcoding, and does not guarantee video output quality.

Another approach to ensure better storage of adaptive streaming content is scalable video coding, and in particular the Scalable Extension of the High Efficiency Video Coding (SHVC) standard. SHVC enables to compress multiple resolutions or qualities as dependent sub-streams (or layers) of a single stream, bringing compression gains compared to encoding these streams independently. By construction, the so called base layer encodes the lowest quality and is used to predict and better compress higher qualities in so-called enhancement layers. Unfortunately, there is little adoption of this standard by the industry, mainly due to its complexity. It follows that there is essentially no support for SHVC decoding on end-user devices. A transcoding operation is then needed at the edge of the content delivery network, but its complexity is very high, typically even higher than for Full Transcoding, as all dependent qualities (layers) need to be decoded in order to extract and transcode a higher quality layer. Another disadvantage is that even in case of support of a SHVC decoder on the client device, the cost of scalability induces a 20% bitrate overhead for the requested quality per additional layer. It follows that to achieve the same HAS quality (in particular, the same bitrate), the output video quality will be lower. In summary, SHVC offers low transcoding complexity if and only if the end device supports SHVC decoding, while only offering limited storage gains and lower output intrinsic visual quality.

Another trade-off between storage gains and transcoding complexity can be obtained by the following approach. Lower-quality streams may be purged in such a way that only the encoding information, such as motion vectors, is kept. These files are called Control Streams. Control Streams are described (and compared to SHVC) in the following publication by Van Wallendael, Glenn, Jan De Cock, and Rik Van de Walle. "Fast transcoding for video delivery by means of a Control Stream," Image Processing (ICIP), 2012 19th IEEE International Conference on. IEEE, 2012.

While transcoding complexity may be very low, it is not controllable; the transcoder obeys the Control Stream instructions and has no gain to achieve by refining local searches. It is also difficult to reduce the complexity further, since decoding the predictions in the Control Stream may be less complex than but is still of a similar complexity to the complexity of decoding a full stream.

It is therefore an object of embodiments of the present invention to find a trade-off between required computational complexity for transcoding on the one hand and storage requirements on the other hand.

This object is achieved by a method for transcoding a video stream encoded in a reference quality into at least one other quality. The method comprises: receiving the video stream in the reference quality; receiving at least one transcoding hint signal comprising: at least one transcoding instruction hint for adapting a prediction search technique for encoding the video stream into the at least one other quality; and at least one respectively associated complexity cost of performing the respective adapted prediction search technique; the at least one transcoding hint signal corresponding respectively with the at least one other quality; extracting from the at least one transcoding hint signal the at least one transcoding instruction hint and the at least one respectively associated complexity cost; decoding the received video stream; and encoding the decoded video stream in the at least one other quality, taking into account the extracted at least one transcoding instruction hint and the at least one associated complexity cost.

In this way, the method allows to control transcoding at low and controllable complexity, because the method can refer to the at least one transcoding instruction hint in the transcoding hint signal to either adapt or not, or only partially, its prediction search technique, in awareness of the associated complexity cost or savings of doing so. It is to be noted that the at least one transcoding hint signal is respectively associated with the video stream in the at least one other quality.

Embodiments of the present invention are based *inter alia* on the insight to store a reference quality (preferably the highest available quality) of a video stream (including a streamed video file or a stored video file) in an encoded format (e.g. MPEG-based such as H.264, HEVC, and their extensions, as well as all other video codecs that make use of motion compensation, a.k.a., hybrid coding, which include e.g. VP8, VP9, Thor, Daala, etc.). This reference quality may be the video stream corresponding to the highest bitrate of a HTTP-based Adaptive Streaming repository, which advantageously ensures that pixels that are decoded from it as well as predictions are of the highest available accuracy or fidelity. However, the reference quality may also be a lower bitrate video stream of such a repository (in this case, scaling up may allow to generate higher quality versions). The insight further is to prune other qualities, that will then have to be transcoded on demand, but not by simply deleting those other qualities, but by generating a transcoding hint signal (THS) for each pruned quality. The THS is generated such that it contains a reduced amount of information (and hence a smaller size) compared to prior art approaches, while not only reducing complexity of the transcoding but also and importantly enabling to control it, which is not foreseen by the prior art approaches. This is advantageous as the density in terms of the number of video streams that can be transcoded in real-time is important, and as the transcoding complexity is difficult to predict and may vary significantly from frame to frame, or from sub-sequence to sub-sequence.

In a specific embodiment, the prediction search technique comprises a motion search technique.

In a further developed embodiment, the at least one transcoding instruction hint represents a prediction search technique refinement by adapting a search space of the prediction search technique; and the method comprises predicting at least one frame of the video stream in the at least one other quality by searching over the adapted search space of the prediction search technique. In a specifically preferred embodiment, the at least one respectively associated complexity cost represents a computational load required for encoding the video stream into the at least one other quality using the adapted search space of the prediction search technique.

In a further developed embodiment, the at least one transcoding hint signal comprises at least one prediction data translation hint for translating prediction data of the video stream in the reference quality into the at least one other quality; and the method comprises translating prediction data of the video stream in the reference quality into the at least one other quality based on the at least one prediction data translation hint.

In a further developed embodiment, the prediction data translation hint comprises a bit sequence indicating prediction data of a predefined spatial region of the video stream in the reference quality; and the method comprises translating the indicated prediction data of the predefined spatial region of the video stream in the reference quality into the at least one other quality.

In a further developed embodiment, the at least one transcoding hint signal comprises at least one quantization parameter hint configured for specifying a quantization parameter to be used for encoding a given predefined spatial region of the video stream in the at least one other quality, preferably as a quantization parameter difference with respect to a predefined spatial region preceding the given predefined spatial region; and the method comprises using the specified quantization parameter or quantization parameter difference for encoding the given predefined spatial region of the video stream in the at least one other quality; and the at least one quantization parameter preferably comprises for a given predefined spatial region of the at least one predefined spatial region at least one quantization parameter difference with respect to a predefined spatial region preceding the given predefined spatial region.

In a further developed embodiment, the at least one transcoding hint signal comprises a plurality of hints including the at least one transcoding instruction hint, and wherein each hint of the plurality of hints is associated with a frame of the video stream in the reference quality; and the method comprises using the plurality of hints in order to reconstruct the respective associated frame or frames.

In a further developed embodiment, the method comprises scaling the decoded received video stream prior to encoding it.

According to another aspect of the present invention, there is provided a transcoder for transcoding a video stream encoded in a reference quality into at least one other quality. The transcoder comprises: a first input terminal configured for receiving the video stream in the reference quality; and a second input terminal configured for receiving at least one transcoding hint signal comprising: at least one transcoding instruction hint for adapting a prediction search technique for encoding the video stream into the at least one other quality; and at least one respectively associated complexity cost of performing the respective adapted prediction search technique; the at least one transcoding hint signal corresponding respectively with the at least one other quality. The transcoder further comprises a parser configured for: extracting from the at least one transcoding hint signal the at least one transcoding instruction hint and the at least one respectively associated complexity cost; a decoder configured for decoding the received video stream; and an encoder configured for encoding the decoded video stream in the at least one other quality, taking into account the extracted at least one transcoding instruction hint and the at least one associated complexity cost.

It will be understood by the skilled person that the features and advantages disclosed hereinabove with respect to embodiments of the method for assisted video coding may also apply, *mutatis mutandis,* to embodiments of the transcoder. In particular, the features of the dependent claims associated with the method for assisted video coding may also be attributed to the transcoder, *mutatis mutandis.*

In a further developed embodiment, the at least one transcoding instruction hint represents a prediction search technique refinement by adapting a search space of the prediction search technique; and the transcoder is further configured for predicting at least one frame of the video stream in the at least one other quality by searching over the adapted search space of the prediction search technique. In a specifically preferred embodiment, the at least one respectively associated complexity cost represents a computational load required for encoding the video stream into the at least one other quality using the adapted search space of the prediction search technique.

In a further developed embodiment, the at least one transcoding hint signal comprises at least one prediction data translation hint for translating prediction data of the video stream in the reference quality into the at least one other quality; and the transcoder is further configured for translating prediction data of the video stream in the reference quality into the at least one other quality based on the at least one prediction data translation hint.

In a further developed embodiment, the prediction data translation hint comprises a bit sequence indicating prediction data of a predefined spatial region of the video stream in the reference quality; and the transcoder is further configured for translating the indicated prediction data of the predefined spatial region of the video stream in the reference quality into the at least one other quality.

In a further developed embodiment, the at least one transcoding hint signal comprises at least one quantization parameter hint configured for specifying a quantization parameter to be used by the encoder for encoding a given predefined spatial region of the video stream in the at least one other quality, preferably as a quantization parameter difference with respect to a predefined spatial region preceding the given predefined spatial region; and the transcoder is further configured for using the specified quantization parameter or quantization parameter difference for encoding the given predefined spatial region of the video stream in the at least one other quality; and the at least one quantization parameter preferably comprises for a given predefined spatial region of the at least one predefined spatial region at least one quantization parameter difference with respect to a predefined spatial region preceding the given predefined spatial region.

In a further developed embodiment, the at least one transcoding hint signal comprises a plurality of hints including the at least one transcoding instruction hint, and each hint of the plurality of hints is associated with a frame of the video stream in the reference quality; and the transcoder is further configured for using the plurality of hints in order to reconstruct the respective associated frame or frames.

In a further developed embodiment, the transcoder comprises a scaler configured for scaling the decoded received video stream it is encoded by the encoder.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the computer program product.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the digital storage medium.

According to yet another aspect of the present invention, there is provided a device programmed to perform a method comprising the steps of any one of the methods of the method embodiments described above.

According to yet another aspect of the present invention, there is provided a method for downloading to a digital storage medium a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the method for downloading.

In the context of the present specification, it is to be understood that transcoder may be referred to as encoders, because a transcoder encodes an input to an output.

Embodiments of a method and transcoder according to the invention are set out in the appended claims. They will be more readily understood after reading the following detailed description taken in conjunction with the accompanying drawings.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

### Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:
Figure 1 schematically illustrates an embodiment of a transcoder according to the present invention;
Figure 2 schematically illustrates a detail of an example prediction data translation operation of an embodiment of an encoder according to the present invention;
Figure 3 shows a table of example transcoding instruction hints for an embodiment of an encoder according to the present invention;
Figure 4 schematically illustrates an embodiment of a prior art video encoder;
Figure 5 schematically illustrates another embodiment of a transcoder according to the present invention, e.g. a further developed embodiment based on the embodiment of Figure 1;
Figures 6A-6B schematically illustrate two other embodiments of a transcoder according to the present invention, e.g. further developed embodiments based on the embodiment of Figure 1 or Figure 5;
Figure 7 schematically illustrates another embodiment of a transcoder according to the present invention, e.g. a further developed embodiment based on the embodiment of Figure 5; and
Figures 8A-8B schematically illustrate two other embodiments of a transcoder according to the present invention, e.g. further developed embodiments based on the embodiment of Figure 6A.

### Description of embodiments

A THS or THS signal contains information that is useful to provide hints to a transcoder. These hints may comprise one or more, preferably all, of the following classes of hints:
1) hints as to what prediction data to translate from a reference quality stream (which may require less bits to be encoded than the actual prediction data of the resultant transcoded video stream or of the above-described Control Streams) - these hints shall below be referred to as prediction translation hints;
2) hints on how complex a transcoding refinement (that is, a prediction search technique adaptation) is needed to obtain the same prediction as in the initial stream (which may enable complexity control and awareness of the output intrinsic visual quality) - these hints shall below be referred to as transcoding instruction hints; and/or
3) hints on how to adapt quantization parameter information (which may ensure and simplify rate control) - these hints shall below be referred to quantization parameter hints.

THS signals may typically have a smaller size (i.e. they may require less bits) than the original quality stream, but also than hypothetical corresponding Control Streams or SHVC layers. Therefore, they may lead to more storage gains.

THS signals may reduce transcoding complexity and may allow to control transcoding complexity. Transcoding complexity may be significantly lower than for SHVC or Full Transcoding, as will be discussed below, and may be on par with that of Control Streams, by only allowing an additional and limited refinement, that is hinted by the transcoding instruction hints.

THS signals may require less complexity to be decoded than Control Streams, which in turn leads to a higher JITT density, as a greater number of separate transcoding operations can take place concurrently with a limited given amount of resources. Furthermore, THS signals may provide a video output intrinsic visual quality that is at least as good as when using Control Streams.

In terms of storage, the size of a THS is significantly smaller than the size of a Control Stream, as will be discussed below.

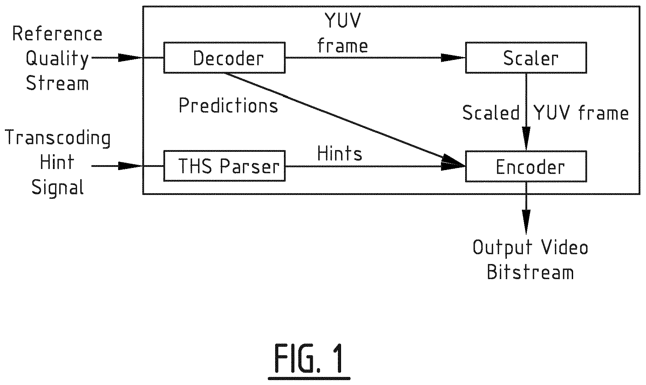

In terms of complexity of the transcoding on demand of a given resolution and quality corresponding to a THS, the transcoding process is less complex, as will be discussed with reference to Figure 1.

Figure 1 schematically illustrates an embodiment of an transcoder according to the present invention. In the figure, the following is shown. A reference quality stream (e.g. a high-definition video stream at a high bitrate, preferably a compression standard compliant stream) is provided to a decoder. The decoder is configured for decoding the reference quality stream and for producing a YUV frame and predictions, based on the decoded reference quality stream. The predictions may for example include any one or more of the following: macroblock type, partition, sub-partitions, sub-macroblock types, motion vectors (for each partition), intra prediction mode (e.g. 16x16, 8x8, 4x4, etc.), intra chroma prediction mode, reference frame index, reference frame list, etc. The YUV frame may be provided to an optional transformation module, such as a scaler, that is configured for scaling the provided YUV frame (at a target resolution and at a target bitrate) (alternatively or additionally, the scaler may be configured for scaling multiple YUV frames to a single YUV frame as output - for example when the reference quality video stream is at 60 frames per second whereas it is desired to provide an output video stream at less, e.g. 30 frames per second, for instance by averaging or dropping input frames), and configured for scaling motion vectors etc. of input frames analogously in order to produce output frames, and for providing the scaled YUV frame to an encoder. It will be understood that other types of colour spaces than YUV, such as RGB, may also be used, and that the scaling is a typical example of a general transformation that may be used. If the reference quality stream is of the same scale as the desired output video bitstream, the scaler may be left out. A Transcoding Hint Signal (THS) is provided to a THS parser. The THS parser is configured for extracting hints from the THS, and for providing (one or more of) the extracted hints to the encoder. The encoder is configured for encoding the scaled YUV frame as an output video bitstream, using the predictions and the extracted hints.

The processing needs of this transcoding operation on demand are lighter than for Full Transcoding and are comparable to the approach based on Control Streams. Another advantage of THS signals is that the complexity of the transcoding operation can be controlled, in contrast to the approach based on Control Streams. This is made possible because the THS signal contains hints that advise a certain transcoding quality but that also enable to tune the transcoding complexity, which in turn may lead to a higher JITT density, as is discussed above.

The transcoder of Figure 1 may be further developed, as will be described below.

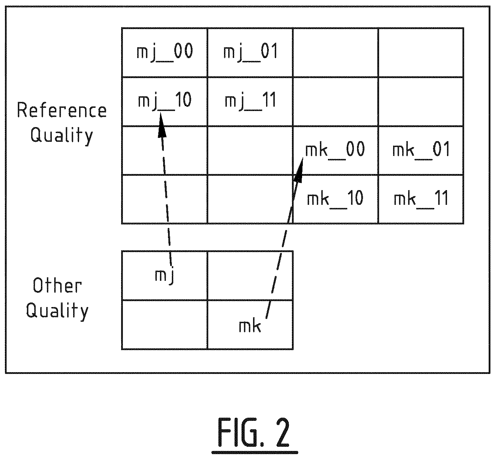

Figure 2 schematically illustrates a detail of an example prediction data translation operation of an embodiment of an encoder according to the present invention. In the figure, the top half shows prediction data of predefined spatial regions (e.g. macroblocks) of the video stream in the reference quality. For convenience of representation, the prediction data are shown arranged in accordance with the way macroblocks are usually depicted. The bottom half of the figure shows prediction of predefined spatial regions (in this case also macroblocks, but if the transcoding operation is to another codec, these may also be general blocks or coding units etc.) of the video stream in another quality. The figure shows two examples of hints as to what prediction data to translate (e.g. copy and/or scale) from the reference quality stream. The hints will herein be denoted as HI, which is merely a handy notation. In this example, the hints represent prediction data translations specifying from which macroblock of a video stream in the reference quality S_0 at a particular quality (all or part of) the prediction information should be translated (for example copied and/or scaled) for a new video stream at a different (e.g. lower) quality S_i than that of the reference quality S_0. In this particular example, the hints may address macroblocks (or blocks, or coding units, etc.) whose prediction data is to be translated. In particular, the figure shows that in this example the video stream in the reference quality S_0 has four times as many macroblocks as the video stream in the other quality S_i (that is, there is a 2x scaling between the reference quality S_0 and the other quality S_i). In this example, each macroblock of the video stream in the other quality S_i is denoted as mj; mk; etc., and each macroblock of the video stream in the reference quality S_0 is denoted as mj_00, mj_01, mj_10, mj_11; mk_00, mk_01, mk_10, mk_11; etc. An example hint for the prediction data translation for the mj macroblock of video stream in the other quality S_i may be to translate the prediction data of macroblock mj_10 of video stream in the reference quality S_0. Likewise, an example hint for the prediction data translation for the mk macroblock of video stream in the other quality S_i may be to translate the prediction data of macroblock mk_00 of video stream in the reference quality S_0. These hints may handily be represented using only two bits (respectively 10 and 00), in this example - in this specification, these hints may for example be denoted as H1_j = 10 and H1_k = 00, respectively. It will be understood that different scaling factors may require a higher number of bits in this representation. For example, a scaling factor of 4x may require an extra, third bit for addressing corresponding macroblocks.

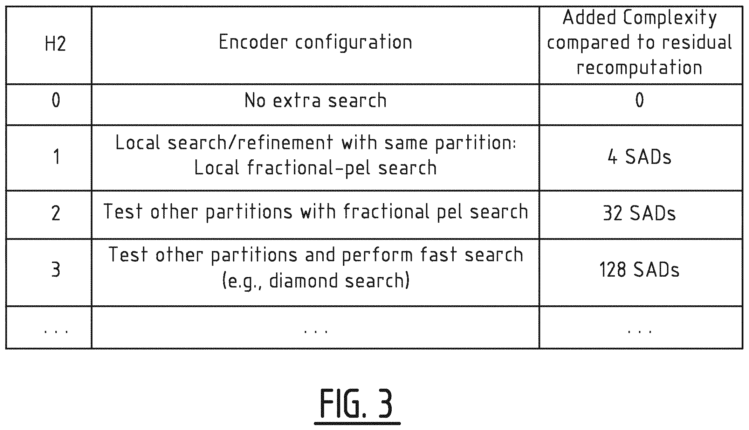

Figure 3 shows a table of example transcoding instruction hints for an embodiment of an encoder according to the present invention. The table may be a look-up table to allow quick consultation. The table may comprise a number of registrations (four example registrations are shown in the rows of the table in the figure). Each registration may represent a transcoding instruction hint - that is, a hint on how complex a transcoding refinement would be needed to obtain an equivalent prediction as for the corresponding initial stream. In the table, the example registrations are denoted using a symbol H2, which is used herein merely as a handy notation. The symbols are ordered in this example table, but it will be understood that other orderings may also be used.

In the example, the first registration (on the row of the table with H2 0), the transcoding instruction hint (that is, the intended encoder configuration may for example be "no extra search", meaning that the encoder should not perform an extra search. In the example, the table also comprises an indication (as a row) of the added complexity compared to residual re-computation, expressed as a number of SADs (Sum(s) of Absolute Differences), which is a measure that is well-known to the skilled person in the art of video coding. This indication may optionally be left out from the table (for example trusting on an implicit assumption of growth of complexity along with the ordering of the symbols used in the table). The first registration may for example be associated with an added complexity of 0, as no extra search is performed - that is, the encoder will not suffer from added complexity if this encoder configuration is used.

In the example, the second registration (with H2 1) may for example represent a transcoding instruction hint for the encoder to use local search and/or refinement with a same partition, for example using local fractional pel (i.e. pixel) search, associated with an added complexity of 4 SADs; the third registration (with H2 2) may for example represent a transcoding instruction hint for the encoder to test other partitions, for example using fractional pel search, associated with an added complexity of 32 SADs; and the fourth registration (with H2 3) may for example represent a transcoding instruction hint for the encoder to test other partitions and perform a fast search, for example a diamond search, associated with an added complexity of 128 SADs. The specific search patterns (fractional search, diamond search, etc.), their associated added complexity, and how to configure the encoder correspondingly, will all be well-known to the skilled person, who may additionally or alternatively use other encoder configurations.

As is discussed above, this allows to control complexity of the transcoding operation, in the sense that a more or less complex encoding operation can be chosen depending on a desired output intrinsic visual quality in the constraint of a desired bitrate and/or desired resolution.

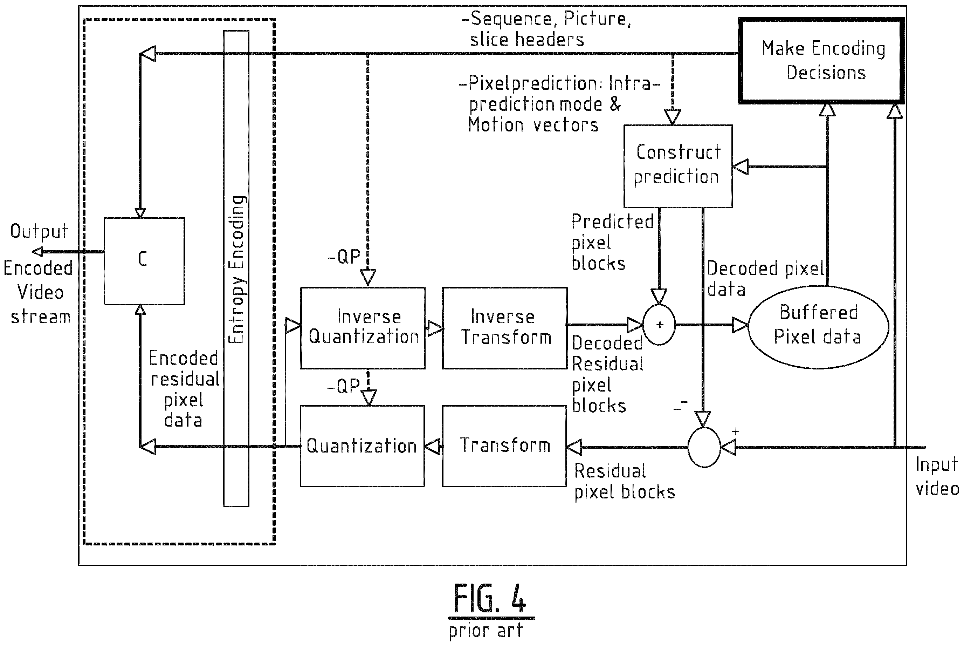

Figure 4 schematically illustrates an embodiment of a prior art encoder. For a discussion of this embodiment of a prior art encoder, the reader is referred to the publication by T. Wiegand et al. "Overview of the H.264/AVC Video Coding Standard", IEEE Trans. On Circuits and Systems for Video Technology, Vol. 13, Nr. 7, July 2003.

Below, a number of preferred embodiments will be discussed, making reference to and using terminology of a number of well-known video coding standards. However, it is to be understood that embodiments of the present invention may also be applied in the context of other video coding standards, presently available or available in the future, *mutatis mutandis.*

For each of the preferred embodiments, it may be assumed without loss of generality that there is an HAS content repository storing content with N qualities (e.g. different bitrates for several different resolutions) denoted S_i, at bitrate b_i, with 0 ≤ i ≤ (N-1) as input.

In these preferred embodiments, the following notation is to be understood: N-1 Transcoding Hint Signals THS_i with 1 ≤ i ≤ (N-1) may be used together with one unchanged quality, denoted S_0 (preferably the highest quality for best results), and without the other (originally available) qualities S_i. A quality S_i at bitrate b_i may be recovered on demand by low complexity transcoding, due to the use of the corresponding THS_i and the unchanged quality S_0.

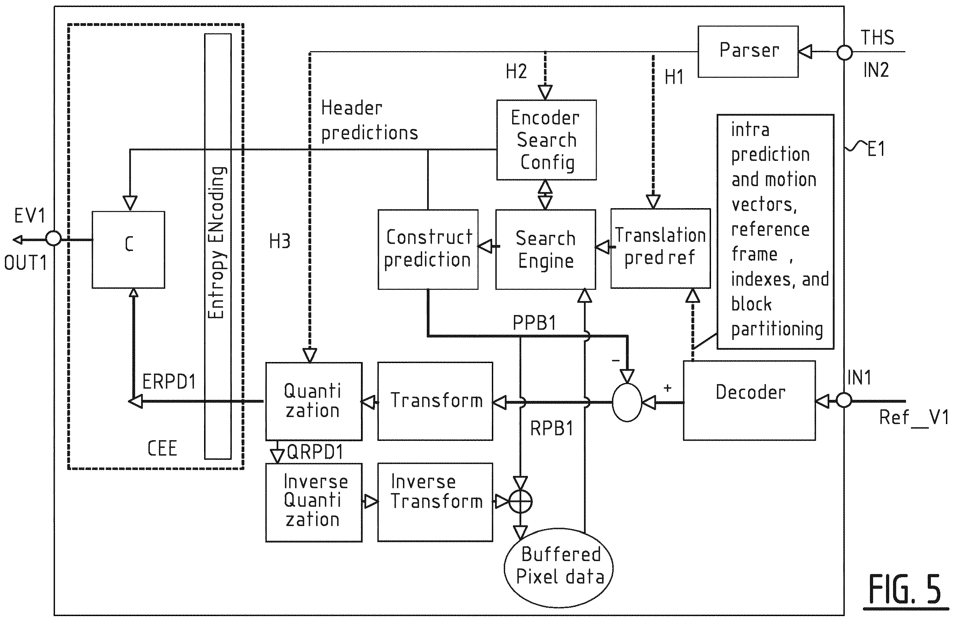

Figure 5 schematically illustrates an embodiment of a transcoder according to the present invention, e.g. a further developed embodiment based on the embodiment of Figure 1. This embodiment E1 includes a first input terminal, denoted IN1, configured for receiving an input video stream, denoted Ref_V1, which can be a real video stream, but also a stored video file. The reference input video stream Ref_V1 may be of any desired video quality (so comprising any of "intrinsic visual quality" or bitrate or resolution or a combination of these but it will be understood that results will be better if the intrinsic visual quality / bitrate / resolution or any combination of these of the input video stream Ref_V1 is the highest available. Similarly to the referred discussion with respect to Figure 4, this input video is encoded. After decoding in the decoder of Figure 5, the resulting decoded video may comprise raw video data such as pixel colour values as well as optionally some additional input data such as the frame size expressed in number of pixels in horizontal and vertical direction, the frame rate, the colour space, e.g. expressed as 4:2:0 or 4:4:4 if YUV is used, etc.

The embodiment E1 further comprises an additional input terminal, denoted IN2, configured for receiving a Transcoding Hint Signal, denoted THS. Structural and functional details of the THS are described above. The THS is provided to a parser, which is configured for extracting from the THS its transcoding instruction hints.

As mentioned, E1 further comprises a decoder configured for decoding the reference input video stream Ref_V1, in order to produce pixel data and prediction data (for example such as intra prediction and motion vectors, reference frame indexes, and block partitioning).

In this particular embodiment, the (spatial and/or temporal) resolution of the input video stream Ref_V1 is assumed to be equal to the resolution of the desired encoded output video stream EV1. Consequently, in this particular embodiment, no scaler is included.

The embodiment E1 may further be adapted for translating, denoted "translation pred ref', the prediction data from the input video stream, serving as reference prediction data, to the desired output format, based on hints about prediction data translation (H1), as discussed above with reference to Figure 2, extracted from the THS (if the THS contains the H1).

The embodiment E1 may further comprise a search engine configured for searching the input reference video stream Ref_V1 based on the translated prediction data. The search engine may optionally be configured by an optional encoder search configuration module, denoted "encoder search config", based on transcoding instruction hints (H2), as discussed above with reference to Figure 3, extracted from the THS (if the THS contains the H2).

The embodiment E1 may further be adapted to construct a sequence of predicted pixel blocks, denoted PPB1, based on the aforementioned buffered pixel data and one or more of the hints (HI and H2), using the module denoted "construct prediction" as it is a prediction construction module. The result of this prediction may be added to the reverse output from an inverse quantization module and an inverse transform module, to produce buffered pixel data, which may be provided to the search engine for performing its search technique.

Moreover, the prediction construction module and the encoder search configuration module may produce suitable headers for the desired encoded output video stream EV1, and may relay or produce suitable predictions, to be processed by the combining module (which will be discussed below).

The sequence of predicted pixel blocks PPB1 and the decoded input video stream Ref_V1 may then be combined to produce a sequence of residual pixel blocks, denoted RPB1, representing the residual or difference between the decoded input video stream Ref_V1 and the sequence of predicted pixel blocks PPB 1.

The embodiment E1 is further adapted to transform and quantize the sequence of residual pixel blocks RPB1. It will be understood that the order of the steps of transforming and quantizing may also be reversed.

Optionally, the embodiment E1 may be configured to quantize the (transformed) sequence of residual pixel blocks RPB1 based on quantization parameter hints, denoted QP, which may specify how to set the used quantization parameter, preferably as a difference to be applied compared to a previous macroblock being processed. As a quantization parameter is specific to a given quality of a given video stream in the other quality S_i, it is preferably to not simply copy the quantization parameter from the reference video stream in the reference quality S_0. In the context of this specification, and for the preferred embodiment wherein the quantization parameter hint is expressed as a difference to be applied (that is, is expressed as a delta quantization parameter), the quantization parameter hints may also be denoted to as H3, which is used herein merely as a handy notation. The quantization parameter hints may be extracted from the THS, if the THS contains them. The output of the quantization operation is a sequence of processed (quantized) residual pixel data QRPD1.

To facilitate the search technique of the search engine module, an inverse quantization module and an inverse transform module may be foreseen, configured to invert the transformation and quantization operations performed on QRPD1, as discussed above.

It will be understood that other methods to obtain processed residual pixel data from the predicted pixel blocks and corresponding blocks of the input video stream Ref_V1 are also possible, and that these other methods may also benefit from any hints contained in the THS.

The processed residual pixel data QRPD1 are then provided, together with other suitable data, such as input encoding structure data indicating the encoding structure of the input video stream Ref_V1, to a combined entropy encoding module, denoted CEE, which in the illustrated embodiment E1 comprises an entropy encoding module, producing entropy encoded residual pixel data ERPD1, followed by a combining module, denoted C, in order to produce an encoded output video stream, denoted EV1. As stated above, the combining module C may also include (optionally entropy encoded) headers and predictions.

In summary, based on the input encoded video stream Ref_V1 of a given reference quality, and based on the corresponding THS for another desired quality, an encoded output video stream EV1 of the other desired quality may be generated.

Below, a number of further developed embodiments will be described.

A first further developed embodiment is in particular applicable when a video input stream has been encoded with the H.264/AVC video encoding standard (or with the VP8 video encoding standard if the term "macroblock" is changed into "block"). In this embodiment, a Transcoding Hint Signal THS_i of a particular quality S_i (that is, a particular resolution at a particular bitrate) may comprise: the same headers as for the quality S_i; and, for each macroblock, at least one of the following: one or more prediction data translation hints H1; one or more transcoding instruction hints H2; and one or more quantization parameter hints H3 - referring for the notations HI, H2 and H3 to the discussion above with reference to Figure 5.

Referring to the example of Figure 2, H1 enables to encode with only 2 bits which prediction data must be translated from quality S_0 to transcode and recover quality in the other quality S_i. The prediction data that is useful for transcoding may comprise any one or more of the following: macroblock type, partition, sub_partitions, sub_macroblock type, motion vectors for each partition, intra prediction mode (16x16, 8x8, 4x4), intra chroma prediction mode, reference frame index and reference frame list, etc.

It must be noted that although the information is provided for each macroblock, information related to several macroblocks can be packed together in a single THS signal. For example in the case of a series of macroblocks encoded as P_SKIP in the input video stream, in the reference quality S_0, most likely HI, H2 and H3 will be the same for all these macroblocks. The packing of information can also be different for HI, H2 and H3; for example in the case of a Region of Interest (ROI), the quantization parameter (QP) may be the same for all macroblocks in the ROI and H3 may be zero for all macroblocks, as the QP is reported in the THS by the so-called Flexible Macroblock Ordering (FMO) Slice header of that ROI. The THS may therefore contain this information at a macroblock level, but the way it is encoded and packed in order to reduce storage needs may advantageously be done on a slice level or on a group of macroblocks level.

This is advantageous for storage gains, as the size of THS_i is significantly smaller than the size of the original video stream in the other quality S_i of that quality. This is because of the following reasons. Firstly, the headers of THS_i may contain similar information as for the video stream in the other quality S_i, but also statistics on the transcoding hints, per frame. The transcoding hints may comprise one or more symbols for prediction data translation, which are relatively small per macroblock (or block, or coding unit, etc.), for the following reasons. When there is no scaling, that is, because the video stream in the other quality S_i is a different quality but the same resolution as the video stream in the reference quality S_0, H1 is implicit (the corresponding macroblock), so this information need not be coded. For a 2x or 1.5x scaling factor between the reference quality S_0 and the other quality S_i (e.g. if video stream in the reference quality S_0 is in 4K resolution and video stream in the other quality S_i in 1080p resolution), two bits may advantageously be used to specify from which macroblock or coding unit the prediction data should be translated (e.g. copied and scaled), as in the example of Figure 2. For a 4x scaling factor between the video stream in the reference quality S_0 and the video stream in the other quality S_i (e.g. if the video stream in the reference quality S_0 is in 4K and the video stream in the other quality S_i is in 560p), only three bits may be needed (e.g. using a binary tree split).

The transcoding hints may further comprise one or more symbols for guiding the transcoding refinement, which can for example be limited to two bits per macroblock unit (allowing four different refinement modes). Moreover, the transcoding hints may further comprise one or more quantization parameter hints, such as the above discussed delta quantization parameters H3, which are efficient in size compared to H.264.

Comparing with the size of the original video stream in the other quality S_i, and taking the example of a 1280x720@24Hz resolution at 4 Mbps, a Control Stream of the prior art can be generated, with a size equivalent to 30% of the input: 1,2 Mbps.

The size of the corresponding THS in case of a constant quantization parameter QP and without compression of H1 and H2 may then for example be 4 bits per macroblock: 86,4 kbps. In a further developed embodiment, including a variable quantization parameter QP encoded with cavlc/cabac, as in the original video stream in the other quality S_i, may in a worst case scenario lead to an average of 1 additional bit per macroblock: 108 kbps.

From this comparison, it follows that the size of a THS may be up to 40x times smaller than the one of the original video stream in the other quality S_i and up to 12x times smaller than a Control Stream of the prior art (in raw format, i.e. without including variable length encoding of the H1 and H2, except the quantization parameter hints H3 derived from in the other quality S_i).

A video stream in the other quality S_i with M macroblocks (or blocks, or coding units, etc.) typically starts with headers and comprises the following information per slice or frame:
[header][prediction_0][qp_0][residual_0]... [prediction_j][qp_j][residuals_j] ... [prediction_(M-1)][qp_(M-1)][residual_(M-1)]

A Transcoding Hint Signal THS_i with M macroblocks (or blocks, or coding units, etc.) may for example have a similar structure per slice/frame as the video stream in the other quality S_i:
[header][H1_0][H2_0][H3_0] ... [H1_j][H2_j][H3_j] ... [H1_(M-1)][H2_(M-1)][H3_(M-1)]

As explained before, the H1_j, H2_j and H3_j may be grouped together in a further developed embodiment, if they are similar at the level of a slice or for groups of macroblocks, if this is more efficient. In this case, such groups may preferably be flagged in the header.

Using variable length coding (as in other well-known codecs) for symbols H1, H2 and H3 may be a further advantageous development of the embodiment.

As explained before, the use of these THS signals is based on the assumption that one reference video stream is still available, denoted Ref_V1. This reference video stream is in a reference quality S_0, which is preferably the highest quality, as in Full Transcoding.

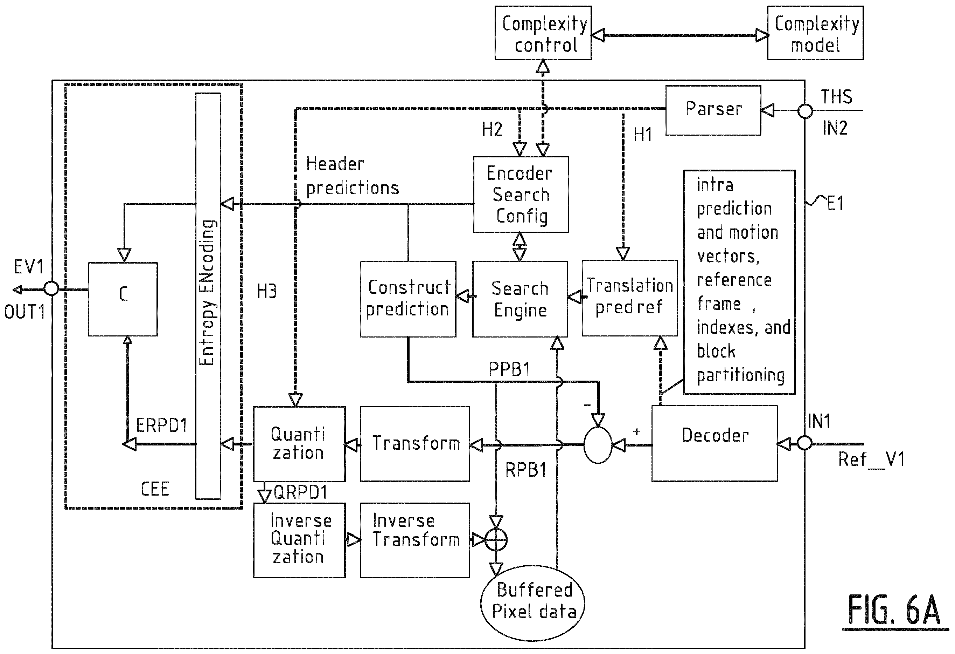

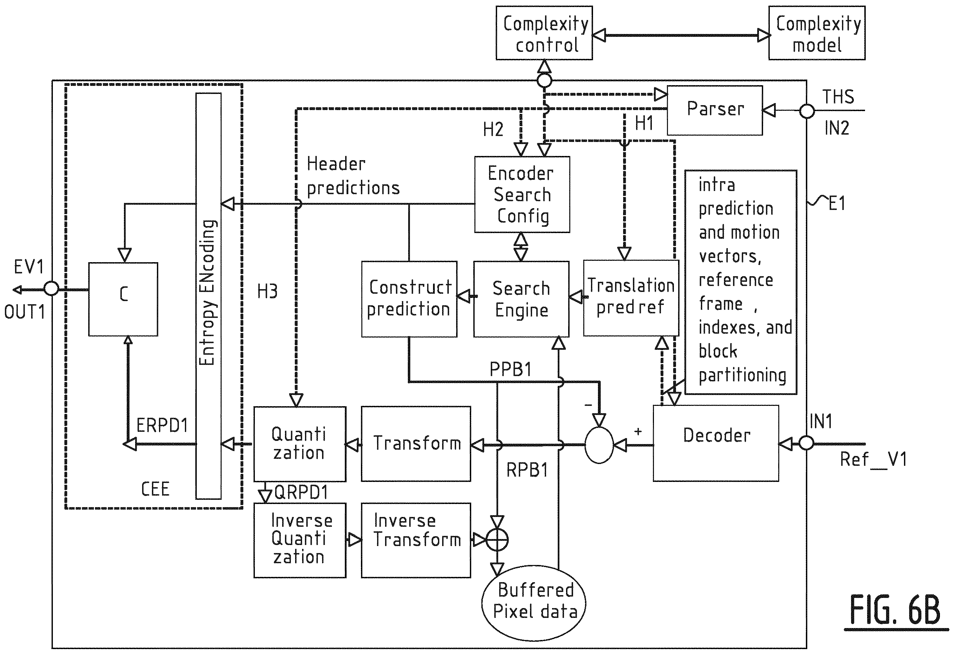

For each desired video stream in another, different quality, denoted S_i, than the reference video stream in the reference quality S_0, with i ranging from 1 to N-1, a Transcoding Hint Signal THS_i may be used as follows: a frame (or slice) j from the reference video stream S_0 may be used and may optionally be translated (e.g. scaled) to the required resolution and quality of THS_i; and prediction data may be used from the reference video stream in the reference quality S_0 and THS_i as well as complexity control information from a global complexity rate controller for the encoder to output a transcoded video stream with the predefined controlled complexity - as is described with reference to Figures 6a and 6b .

Figure 6A schematically illustrates another embodiment E1 of an transcoder according to the present invention, e.g. a further developed embodiment based on the embodiment of Figure 1 or Figure 5. This embodiment differs from the embodiment of Figure 5 by the fact that the transcoder now is connected to a complexity control module, which is external to the transcoder. Such a complexity control module is described more into detail in another patent application from the same inventors and applicant and filed on the same day as this present invention, and is configured for controlling of the optional encoder search configuration module discussed above, denoted "encoder search config". This is shown by the control signal from the complexity control module to the transcoder, more in particular to this encoder search configuration module. The encoder search configuration module operates based on transcoding instruction hints (H2), as discussed above with reference to Figure 3, extracted from the THS (if the THS contains the H2). The complexity control module is configured for further controlling the encoder search configuration module based on the hints extracted from the THS. In particular, if the THS comprises multiple transcoding instruction hints representing a plurality of different prediction search technique refinements (for example, different adaptation of the search space of the prediction search technique), the complexity control module may be configured to adapt these according to a predefined policy, or on the fly.

It is to be remarked that in the embodiments of Figure 6A the coupling between the transcoder and the complexity control module is bi-directional. This enables the transcoder, more in particular the encoder search configuration module in this particular embodiment to provide feedback to the complexity control module, concerning parameters for example related to intrinsic visual quality measured by SAD in the Search Engine per block or averaged per slice or frame, decoder and/or parser errors and complexity cost (for example execution time), etc. However in other embodiments the transcoder just received control information from the complexity control module, as described in a previous paragraph.

Figure 6B schematically illustrates another embodiment of a transcoder according to the present invention, e.g. a further developed embodiment based on the embodiment of Figure 6a. This embodiment differs from the embodiment of Figure 6a in that the complexity control module provides a control signal which controls not only the encoder search configuration module, but also to the parser and to the decoder modules. This control of the complexity control module to the decoder module enables the complexity control module to instruct the decoder with commands enabling the decoder to decode frames of the input reference quality according to a new selected output GOP size (as well as forward or backwards navigation commands) for example. Similarly, the control from the complexity control module to the THS parser module enables to parse the information contained in the THS corresponding to the decoded frames at the decoder module when the decoder is instructed for an output GOP size modification (as well as forward or backwards navigation commands) for example, in accordance with this control signal. This control information, being the GOP size modification in this example is also transmitted as part of this control signal provided by the complexity control module to the Encoder Search Config module, as described in the embodiment illustrated on Figure 6a, which prepares headers and coding instructions according to the instructed output GOP size, such as corrected reference lists, slice types etc.

In the embodiment of Figure 6B , the transcoder is also adapted to provide feedback to this control module. The terminal at the top is thus a bi-directional terminal for receiving control signals from the control module, and for providing feedback information back such as for example, execution times from the decoder, THS parser and Encoder Search Config modules, decoding errors from the decoder, parsing errors from the THS parser, and from the Encoder Search Config module computed prediction block (or averaged on a slice or frame) SAD (or other intrinsic quality metrics), ratios between the chosen motion vectors length and the instructed search window, transcoding complexity measures statistics (including module or thread complexity), transcoding coding statistics etc., to the complexity control module. However other embodiments are possible with only a uni-directional control input from complexity control module to the transcoder.

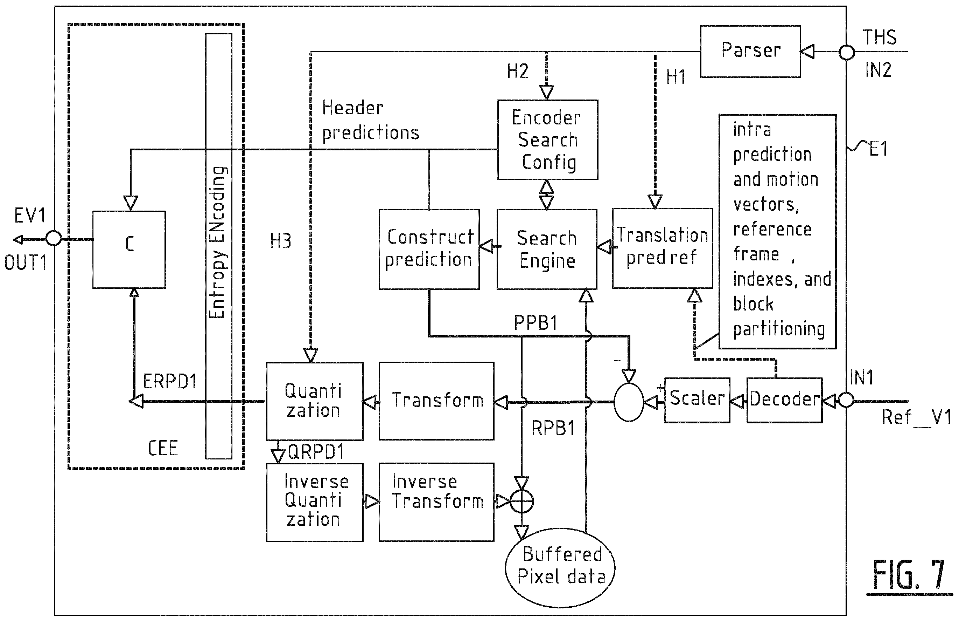

Figure 7 schematically illustrates another embodiment of a transcoder according to the present invention, e.g. a further developed embodiment based on the embodiment of Figure 5. A difference with the embodiment of Figure 5 is that the scale of the input video stream Ref_V1 is not assumed to be equal to the scale of the desired encoded output video stream EV1. Consequently, in this particular embodiment, a scaler is included after the decoder.

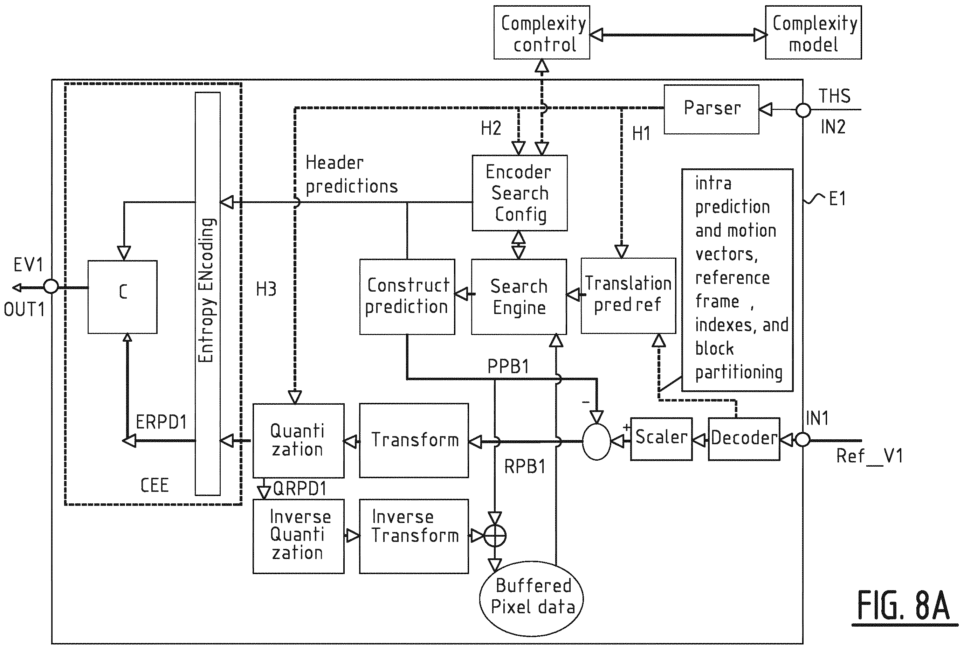

Figure 8A schematically illustrates another embodiment of an encoder according to the present invention, e.g. a further developed embodiment based on the embodiment of Figure 6A. The embodiment of Figure 8A differs from the embodiment of Figure 6A analogously to the difference between the embodiment of Figure 7 and the embodiment of Figure 5.

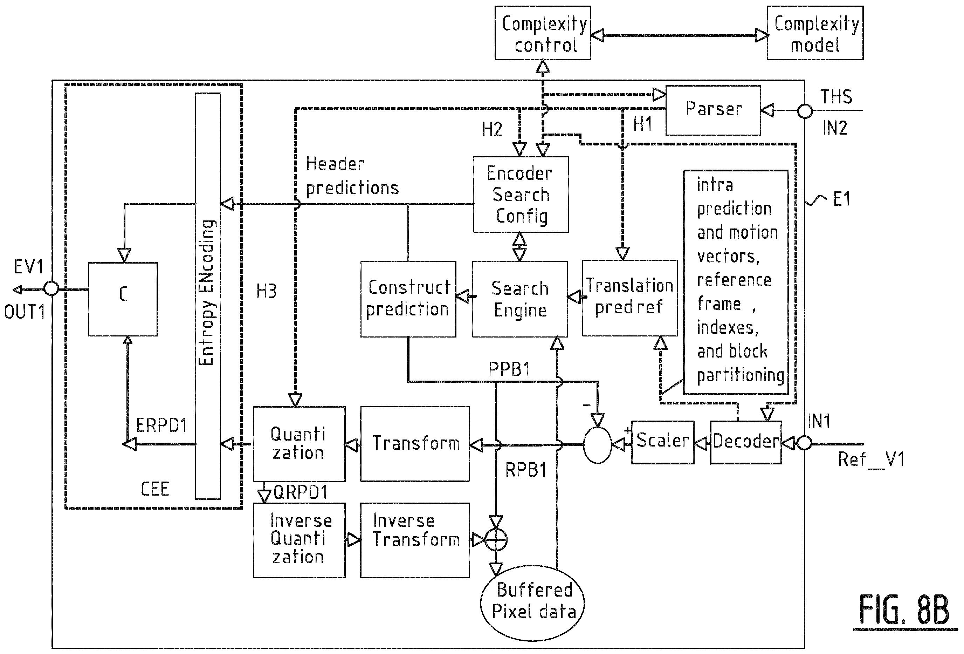

Figure 8B schematically illustrates another embodiment of an encoder according to the present invention, e.g. a further developed embodiment based on the embodiment of Figure 6B. The embodiment of Figure 8B differs from the embodiment of Figure 6B analogously to the difference between the embodiment of Figure 8A and the embodiment of Figure 6A.

Below, a number of further features, advantages and considerations relating to various embodiments according to the present invention will be described.

The translation (e.g. copying and/or scaling) of prediction data from the reference video stream Ref_V1 in the reference quality S_0 to recover the desired video stream EV1 in the desired other quality S_i may comprise a straightforward copy when the resolutions of the reference video stream Ref_V1 and the desired video stream EV1 are the same. In case of scaling by a factor P (with P = 1.5, 2, 4, etc.), motion vectors length from the reference video stream Ref_V1 may need to be scaled down by a factor P. In a further developed embodiment, other prediction information may also be copied - in this case, preferably an additional local search to translate this other prediction information may also be contemplated.

In case the reference video stream Ref_V1 in the reference quality S_0 is encoded in H.264 AVC and that a VP8 transcoding is requested for the video stream EV1 in the desired other quality S_i, then modes may be translated to the closest modes in VP8: some intra modes specific to VP8 do not exist in H.264 and another close mode can be chosen by the transcoder. Similarly B slices are not supported by VP8, but its motion vectors may still be applied by using different VP8 reference buffers (for example using the so-called alt ref and golden ref).

The transcoder encoding module may output the desired video stream EV1 in the desired other quality S_i by compressing the scaled YUV frames decoded from the reference video stream Ref_V1 it receives as input, using the hints provided by the decoding of the THS_i: H1 for selecting which prediction from the reference video stream Ref_V1 it has to translate, e.g. copy, (these predictions from the reference video stream Ref_V1 are also fed as input to the encoder module), the level of local refinement it can perform to improve that encoding hinted by H2 and which QP it has to select thanks to H3 information.

The complexity of the transcoding can be controlled and adapted based on the THS. As described with reference to the example of Figure 3, the transcoding hints may comprise several levels of additional local search complexity, for example expressed in numbers of SADs (or for example in numbers of position tests), for convenience. These levels may for example be predefined or may be adapted on the fly by the transcoder. The THS may preferably flag for each macroblock only the optimal amount of search that should be done in order to provide the same prediction as in the original video stream Ref_V1 in the reference quality S_0.

In an embodiment the THS can include PSNR (Peak Signal-to-Noise Ratio) ranges, per frame or slice, depending on the maximal level of search that is used. For example, a minimum PSNR may be computed if for all macroblocks no additional search is done. Similarly, a maximal PSNR may be computed and included in the THS when the searches as hinted in the THS are applied at their prescribed complexity. Other PSNR ranges may be provided, for example, if the transcoder cannot afford the level 3 (referring again to the example of Figure 3) of complexity for this stream, a PSNR may be computed and annotated in the THS if the macroblocks hinted with a complexity equal to Level 3 are done at Level 2 complexity (referring still to the example of Figure 3). Similarly, another PSNR may be given if all H2 at 1, 2 and 3 are set to 1. An advantage of this is that the transcoder can then take informed decisions on what intrinsic visual quality gains or losses will be obtained if it changes the complexity levels. It is to be noted that these PSNRs can only be estimated or approximated, as drift will typically occur from frame to frame until the next IDR (Instantaneous Decoding Refresh) frame when the transcoder will start to reduce the prescribed complexity. However, these intrinsic visual quality deltas can already give a useful hint on a trade-off between complexity and intrinsic visual quality, to be done on the fly.

It will be understood that the above is also applicable, *mutatis mutandis,* in the context of other video codecs. For example, in an alternative embodiment, one or more of the THS signals may be constructed for H.265/HEVC input video streams. This alternative embodiment may correspond with the above-described embodiment in the context of H.264/AVC, with in particular the following differences.

Instead of macroblocks, the video streams in the other qualities S_i may comprise Coding Tree Units (CTUs) and Coding Units (CUs) that are a partitioning of video frames in a quadtree. Consequently, a prediction data translation hint H1 in THS_i may then refer to the corresponding CU in the reference video stream Ref_V1 in the reference quality S_0 for translating (e.g. copying) some or all prediction information in order to encode a given CU for the desired other quality S_i.

Since it is important for coding performance, the THS_i for HEVC video streams preferably still includes the CTU partitioning information (hence preferably making explicit the blocks of pixels for which prediction information is translated, whereas macroblocks are implicit for AVC). The bitrate required for such CTU description is limited in HEVC and may be worth the gains in complexity for later transcoding operations.

In order to define which CU from the reference quality S_0 should be used for translating (e.g. copying) predictions for a given CU in the desired other quality S_i, it may be preferred to use motion merge mode indexes. However, a similar tree indexing representation using a bit sequence as the one used for AVC may also be possible.

The prediction data to be translated may be similar to that for AVC, and may in particular include any one or more of the following: intra modes, motion vectors, reference frames, merge modes, transform size blocks, etc.

For the transcoding instruction hints H2, similarly as for AVC, it may be preferred to signal the complexity of the required local search to be performed in order to improve prediction performance. Compared to the above-described embodiment in the context of AVC, many more CU and PU sizes can be chosen and the search space can quickly increase. Consequently, it may be preferred to control the complexity increase using a parameter to specify the maximum PU size partitioning and search ranges.

In yet another alternative embodiment, in case the user has an HEVC compatible device, it may be advantageous to transcode the stream in HEVC, even if THS were originally generated for another codec such as AVC. In this case, prediction data in the THS files can be used as good hints for an HEVC transcoder, which would have to re-compute the "best" (according to some suitable measure) CTU partition. To do this, Merge Mode and early termination merge search are known techniques to transcode in low complexity an AVC input stream into an HEVC output stream and can be directly used here. This approach advantageously achieves a storage gain compared to existing AVC-to-HEVC transcoders, due to the use of THS.

In yet another alternative embodiment, in case the video streams are stored in HEVC but the user is using a device that can only support AVC, then THS made for HEVC can also be re-used. In that case, CTU partitions may be split into macroblocks and predictions may be translated to the format of AVC. Motion vector accuracy may be cast down to that of AVC, HEVC intra modes may be taken as hints for AVC intra modes, reference indexes may be re-used when possible, and initial quantization parameters may be re-computed. Rate control may be added, but available delta quantization parameters from HEVC may prove good hints for predicting AVC delta quantization parameters. This approach also advantageously achieves a storage gain compared to existing HEVC-to-AVC transcoders, due to the use of THS.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. A method for transcoding a video stream encoded in a reference quality into at least one other quality, the method comprising:
- receiving the video stream in the reference quality;
- receiving at least one transcoding hint signal corresponding respectively with the at least one other quality comprising: at least one transcoding instruction hint for adapting a prediction search technique for encoding the video stream into the at least one other quality; and at least one respectively associated complexity cost of performing the respective adapted prediction search technique;
- extracting from the at least one transcoding hint signal the at least one transcoding instruction hint and the at least one respectively associated complexity cost by parsing information contained in the at least one transcoding hint signal;
- decoding the received video stream; and
- encoding the decoded video stream in the at least one other quality, taking into account the extracted at least one transcoding instruction hint and the at least one associated complexity cost; and **characterized in that**
the at least one transcoding hint signal comprises at least one prediction data translation hint for translating prediction data of the video stream in the reference quality into the at least one other quality, wherein the prediction data translation hint comprises a bit sequence indicating prediction data of a predefined spatial region of the video stream in the reference quality; and wherein the method comprises translating the indicated prediction data of the predefined spatial region of the video stream in the reference quality into the at least one other quality based on the at least one prediction data translation hint, wherein the at least one transcoding instruction hint represents a prediction search technique refinement by adapting a search space of the prediction search technique.

2. The method of claim 1, wherein the method comprises predicting at least one frame of the video stream in the at least one other quality by searching over the adapted search space of the prediction search technique; and/or wherein the at least one respectively associated complexity cost represents a computational load required for encoding the video stream into the at least one other quality using the adapted search space of the prediction search technique.

3. The method of any one of the claims 1-2, wherein the at least one transcoding hint signal comprises at least one quantization parameter hint configured for specifying a quantization parameter to be used for encoding a given predefined spatial region of the video stream in the at least one other quality, preferably as a quantization parameter difference with respect to a predefined spatial region preceding the given predefined spatial region; and wherein the method comprises using the specified quantization parameter or quantization parameter difference for encoding the given predefined spatial region of the video stream in the at least one other quality; and wherein the at least one quantization parameter preferably comprises for a given predefined spatial region of the at least one predefined spatial region at least one quantization parameter difference with respect to a predefined spatial region preceding the given predefined spatial region.

4. The method of any one of the claims 1-3, wherein the at least one transcoding hint signal comprises a plurality of hints including the at least one transcoding instruction hint, and wherein each hint of the plurality of hints is associated with a frame of the video stream in the reference quality; and wherein the method comprises using the plurality of hints in order to reconstruct the respective associated frame or frames.

5. The method of any one of the claims 1-4, comprising:
- scaling the decoded received video stream prior to encoding it.

6. A transcoder for transcoding a video stream encoded in a reference quality into at least one other quality, the transcoder comprising:
- a first input terminal configured for receiving the video stream in the reference quality;
- a second input terminal configured for receiving at least one transcoding hint signal corresponding respectively with the at least one other quality comprising: at least one transcoding instruction hint for adapting a prediction search technique for encoding the video stream into the at least one other quality; and at least one respectively associated complexity cost of performing the respective adapted prediction search technique;
- a parser configured for extracting from the at least one transcoding hint signal the at least one transcoding instruction hint and the at least one respectively associated complexity cost by parsing information contained in the at least one transcoding hint signal;
- a decoder configured for decoding the received video stream; and
- an encoder configured for encoding the decoded video stream in the at least one other quality, taking into account the extracted at least one transcoding instruction hint and the at least one associated complexity cost; and **characterised in that**
the at least one transcoding hint signal comprises at least one prediction data translation hint for translating prediction data of the video stream in the reference quality into the at least one other quality, wherein the prediction data translation hint comprises a bit sequence indicating prediction data of a predefined spatial region of the video stream in the reference quality; and wherein the transcoder is further configured for translating the indicated prediction data of the predefined spatial region of the video quality based on the at least one prediction data translation hint, wherein the at least one transcoding instruction hint represents a prediction search technique refinement by adapting a search space of the prediction search technique.

7. The transcoder of claim 6, wherein the transcoder is further configured for predicting least one frame of the video stream in the at least one other quality by searching over the adapted search space of the prediction search technique.

8. The transcoder of claim 7, wherein the at least one respectively associated complexity cost represents a computational load required for encoding the video stream into the at least one other quality using the adapted search space of the prediction search technique;

9. The transcoder of any one of the claims 6-8, wherein the at least one transcoding hint signal comprises at least one quantization parameter hint configured for specifying a quantization parameter to be used by the encoder for encoding a given predefined spatial region of the video stream in the at least one other quality, preferably as a quantization parameter difference with respect to a predefined spatial region preceding the given predefined spatial region; and wherein the transcoder is further configured for using the specified quantization parameter or quantization parameter difference for encoding the given predefined spatial region of the video stream in the at least one other quality; and wherein the at least one quantization parameter preferably comprises for a given predefined spatial region of the at least one predefined spatial region at least one quantization parameter difference with respect to a predefined spatial region preceding the given predefined spatial region.

10. The transcoder of any one of the claims 6-9, wherein the at least one transcoding hint signal comprises a plurality of hints including the at least one transcoding instruction hint, and wherein each hint of the plurality of hints is associated with a frame of the video stream in the reference quality; and wherein the transcoder is further configured for using the plurality of hints in order to reconstruct the respective associated frame or frames.

11. The transcoder of any one of the claims 6-10, comprising:
- a scaler configured for scaling the decoded received video stream before it is encoded by the encoder.

12. A computer program product comprising a computer-executable program of instructions for performing, when executed on a computer, the steps of the method of any one of claims 1-5.

## Patentansprüche

1. Verfahren zum Umcodieren eines Videostroms, der in einer Bezugsqualität codiert ist, in mindestens eine andere Qualität, wobei das Verfahren Folgendes umfasst:
- Empfangen des Videostroms in der Bezugsqualität;
- Empfangen mindestens eines Umcodierungshinweissignals, das jeweils der mindestens einen anderen Qualität entspricht und das Folgendes umfasst: mindestens einen Umcodierungsanweisungshinweis zum Anpassen einer Vorhersagesuchtechnik zum Codieren des Videostroms in der mindestens einen anderen Qualität und mindestens einen jeweils zugeordneten Komplexitätsaufwand des Durchführens der entsprechenden angepassten Vorhersagesuchtechnik;
- Extrahieren aus dem mindestens einen Umcodierungshinweissignal des mindestens einen Umcodierungsanweisungshinweises und des mindestens einen jeweils zugeordneten Komplexitätsaufwands durch Parsen von Informationen, die in mindestens einem Umcodierungshinweissignal enthalten sind;
- Decodieren des empfangenen Videostroms und
- Codieren des decodierten Videostroms in der mindestens einen anderen Qualität unter Berücksichtigung des extrahierten mindestens einen Umcodierungsanweisungshinweises und des mindestens einen zugeordneten Komplexitätsaufwands;
**dadurch gekennzeichnet, dass**
das mindestens eine Umcodierungshinweissignal mindestens einen Vorhersagedatenübersetzungshinweis zum Übersetzen von Vorhersagedaten des Videostroms in der Bezugsqualität in die mindestens eine andere Qualität umfasst, wobei der Vorhersagedatenübersetzungshinweis eine Bitfolge umfasst, die Vorhersagedaten eines vordefinierten räumlichen Bereichs des Videostroms in der Bezugsqualität angibt; und das Verfahren ein Übersetzen der angegebenen Vorhersagedaten des vordefinierten räumlichen Bereichs des Videostroms in der Bezugsqualität in die mindestens eine andere Qualität auf der Grundlage des mindestens einen Vorhersagedatenübersetzungshinweises umfasst, wobei der mindestens eine Umcodierungsanweisungshinweis eine Vorhersagesuchtechnikverfeinerung durch Anpassen eines Suchraums der Vorhersagesuchtechnik repräsentiert.

2. Verfahren nach Anspruch 1, wobei das Verfahren ein Vorhersagen mindestens eines Rahmens des Videostroms in der mindestens einen anderen Qualität durch Suchen über den angepassten Suchraum der Vorhersagesuchtechnik umfasst und/oder der mindestens eine jeweils zugeordnete Komplexitätsaufwand eine Rechenlast repräsentiert, die zum Codieren des Videostroms in der mindestens einen anderen Qualität unter Verwendung des angepassten Suchraums der Vorhersagesuchtechnik erforderlich ist.

3. Verfahren nach einem der Ansprüche 1-2, wobei das mindestens eine Umcodierungshinweissignal mindestens einen Quantisierungsparameterhinweis umfasst, der konfiguriert ist zum Festlegen eines Quantisierungsparameters, der zum Codieren eines gegebenen vordefinierten räumlichen Bereichs des Videostroms in der mindestens einen anderen Qualität verwendet werden soll, bevorzugt als eine Quantisierungsparameterdifferenz in Bezug auf einen vordefinierten räumlichen Bereich, der dem gegebenen vordefinierten räumlichen Bereich vorausgeht; das Verfahren ein Verwenden des festgelegten Quantisierungsparameters oder der festgelegten Quantisierungsparameterdifferenz zum Codieren des gegebenen vordefinierten räumlichen Bereichs des Videostroms in der mindestens einen anderen Qualität umfasst; und der mindestens eine Quantisierungsparameter bevorzugt für einen gegebenen vordefinierten räumlichen Bereich des mindestens einen vordefinierten räumlichen Bereichs mindestens eine Quantisierungsparameterdifferenz in Bezug auf einen vordefinierten räumlichen Bereich, der dem gegebenen vordefinierten räumlichen Bereich vorausgeht, umfasst.

4. Verfahren nach einem der Ansprüche 1-3, wobei das mindestens eine Umcodierungshinweissignal mehrere Hinweise umfasst, die den mindestens einen Umcodierungsanweisungshinweis enthalten, und jeder Hinweis der mehreren Hinweise einem Rahmen des Videostroms in der Bezugsqualität zugeordnet ist; und wobei das Verfahren ein Verwenden der mehreren Hinweise umfasst, um jeweils den einen oder die mehreren zugeordneten Rahmen zu rekonstruieren.

5. Verfahren nach einem der Ansprüche 1-4, das Folgendes umfasst:
- Skalieren des decodierten empfangenen Videostroms, bevor er codiert wird.

6. Umcodierer zum Umcodieren eines Videostroms, der in einer Bezugsqualität codiert ist, in mindestens eine andere Qualität, wobei das Verfahren Folgendes umfasst:
- einen ersten Eingangsanschluss, der konfiguriert ist zum Empfangen des Videostroms in der Bezugsqualität;
- einen zweiten Eingangsanschluss, der konfiguriert ist zum Empfangen mindestens eines Umcodierungshinweissignals, das jeweils der mindestens einen anderen Qualität entspricht und das Folgendes umfasst: mindestens einen Umcodierungsanweisungshinweis zum Anpassen einer Vorhersagesuchtechnik zum Codieren des Videostroms in der mindestens einen anderen Qualität und mindestens einen jeweils zugeordneten Komplexitätsaufwand des Durchführens der entsprechenden angepassten Vorhersagesuchtechnik;
- einen Parser, der konfiguriert ist zum Extrahieren aus dem mindestens einen Umcodierungshinweissignal des mindestens einen Umcodierungsanweisungshinweises und des mindestens einen jeweils zugeordneten Komplexitätsaufwands durch Parsen von Informationen, die in mindestens einem Umcodierungshinweissignal enthalten sind;
- einen Decoder, der konfiguriert ist zum Decodieren des empfangenen Videostroms und
- einen Codierer, der konfiguriert ist zum Codieren des decodierten Videostroms in der mindestens einen anderen Qualität unter Berücksichtigung des extrahierten mindestens einen Umcodierungsanweisungshinweises und des mindestens einen zugeordneten Komplexitätsaufwands;
**dadurch gekennzeichnet, dass**
das mindestens eine Umcodierungshinweissignal mindestens einen Vorhersagedatenübersetzungshinweis zum Übersetzen von Vorhersagedaten des Videostroms in der Bezugsqualität in die mindestens eine andere Qualität umfasst, wobei der Vorhersagedatenübersetzungshinweis eine Bitfolge umfasst, die Vorhersagedaten eines vordefinierten räumlichen Bereichs des Videostroms in der Bezugsqualität angibt; und der Umcodierer ferner konfiguriert ist zum Übersetzen der angegebenen Vorhersagedaten des vordefinierten räumlichen Bereichs des Videostroms in der Bezugsqualität in die mindestens eine andere Qualität auf der Grundlage des mindestens einen Vorhersagedatenübersetzungshinweises, wobei der mindestens eine Umcodierungsanweisungshinweis eine Vorhersagesuchtechnikverfeinerung durch Anpassen eines Suchraums der Vorhersagesuchtechnik repräsentiert.

7. Umcodierer nach Anspruch 6, wobei der Umcodierer ferner konfiguriert ist zum Vorhersagen mindestens eines Rahmens des Videostroms in der mindestens einen anderen Qualität durch Suchen über den angepassten Suchraum der Vorhersagesuchtechnik.

8. Umcodierer nach Anspruch 7, wobei der mindestens eine jeweils zugeordnete Komplexitätsaufwand eine Rechenlast repräsentiert, die zum Codieren des Videostroms in der mindestens einen anderen Qualität unter Verwendung des angepassten Suchraums der Vorhersagesuchtechnik erforderlich ist.

9. Umcodierer nach einem der Ansprüche 6-8, wobei das mindestens eine Umcodierungshinweissignal mindestens einen Quantisierungsparameterhinweis umfasst, der konfiguriert ist zum Festlegen eines Quantisierungsparameters, der durch den Codierer zum Codieren eines gegebenen vordefinierten räumlichen Bereichs des Videostroms in der mindestens einen anderen Qualität verwendet werden soll, bevorzugt als eine Quantisierungsparameterdifferenz in Bezug auf einen vordefinierten räumlichen Bereich, der dem gegebenen vordefinierten räumlichen Bereich vorausgeht; der Umcodierer ferner konfiguriert ist zum Verwenden des festgelegten Quantisierungsparameters oder der festgelegten Quantisierungsparameterdifferenz zum Codieren des gegebenen vordefinierten räumlichen Bereichs des Videostroms in der mindestens einen anderen Qualität; und der mindestens eine Quantisierungsparameter bevorzugt für einen gegebenen vordefinierten räumlichen Bereich des mindestens einen vordefinierten räumlichen Bereichs mindestens eine Quantisierungsparameterdifferenz in Bezug auf einen vordefinierten räumlichen Bereich, der dem gegebenen vordefinierten räumlichen Bereich vorausgeht, umfasst.

10. Umcodierer nach einem der Ansprüche 6-9, wobei das mindestens eine Umcodierungshinweissignal mehrere Hinweise umfasst, die den mindestens einen Umcodierungsanweisungshinweis enthalten, und jeder Hinweis der mehreren Hinweise einem Rahmen des Videostroms in der Bezugsqualität zugeordnet ist; und wobei Umcodierer ferner konfiguriert ist zum Verwenden der mehreren Hinweise, um jeweils den einen oder die mehreren zugeordneten Rahmen zu rekonstruieren.

11. Umcodierer nach einem der Ansprüche 6-10, der Folgendes umfasst:
- eine Skalierungseinrichtung, die konfiguriert ist zum Skalieren des decodierten empfangenen Videostroms bevor er durch den Codierer codiert wird.

12. Computerprogrammprodukt, das ein computerausführbares Programm von Anweisungen zum Durchführen, wenn es in einem Computer ausgeführt wird, der Schritte des Verfahrens nach einem der Ansprüche 1-5 enthält.

## Revendications

1. Procédé de transcodage d'un flux vidéo codé dans une qualité de référence en au moins une autre qualité, le procédé comprenant :
- la réception du flux vidéo dans la qualité de référence ;
- la réception d'au moins un signal d'indice de transcodage correspondant respectivement à l'autre ou aux autres qualités comprenant : au moins un indice d'instruction de transcodage servant à adapter une technique de recherche de prédiction pour coder le flux vidéo dans l'autre ou les autres qualités ; et au moins un coût de complexité respectivement associé de la réalisation de la technique adaptée considérée de recherche de prédiction ;
- l'extraction, à partir du signal ou des signaux d'indices de transcodage, de l'indice ou des indices d'instructions de transcodage et du ou des coûts de complexité respectivement associés en analysant des informations contenues dans le signal ou les signaux d'indices de transcodage ;
- le décodage du flux vidéo reçu ; et
- le codage du flux vidéo décodé dans l'autre ou les autres qualités, compte tenu de l'indice ou des indices extraits d'instructions de transcodage et du ou des coûts de complexité associés ; et **caractérisé en ce que**
le signal ou les signaux d'indices de transcodage comprend au moins un indice de traduction de données de prédiction servant à traduire des données de prédiction du flux vidéo dans la qualité de référence vers l'autre ou les autres qualités, l'indice de traduction de données de prédiction comprenant une séquence de bits indiquant des données de prédiction d'une région spatiale prédéfinie du flux vidéo dans la qualité de référence ; et le procédé comprenant la traduction des données de prédiction indiquées de la région spatiale prédéfinie du flux vidéo dans la qualité de référence vers l'autre ou les autres qualités d'après l'indice ou les indices de traduction de données de prédiction, l'indice ou les indices d'instructions de transcodage représentant un raffinement de la technique de recherche de prédiction en adaptant un espace de recherche de la technique de recherche de prédiction.

2. Procédé selon la revendication 1, le procédé comprenant la prédiction d'au moins une trame du flux vidéo dans l'autre ou les autres qualités en effectuant une recherche sur l'espace de recherche adapté de la technique de recherche de prédiction ; et/ou le ou les coûts de complexité respectivement associés représentant une charge de calcul nécessaire pour coder le flux vidéo dans l'autre ou les autres qualités en utilisant l'espace de recherche adapté de la technique de recherche de prédiction.

3. Procédé selon l'une quelconque des revendications 1 à 2, le signal ou les signaux d'indices de transcodage comprenant au moins un indice de paramètre de quantification configuré pour spécifier un paramètre de quantification à utiliser pour coder une région spatiale prédéfinie donnée du flux vidéo dans l'autre ou les autres qualités, de préférence en tant que différence de paramètres de quantification par rapport à une région spatiale prédéfinie précédant la région spatiale prédéfinie donnée ; et le procédé comprenant l'utilisation du paramètre de quantification ou de la différence de paramètres de quantification spécifiés pour coder la région spatiale prédéfinie donnée du flux vidéo dans l'autre ou les autres qualités ; et le ou les paramètres de quantification comprenant de préférence, pour une région spatiale prédéfinie donnée parmi la ou les régions spatiales prédéfinies, au moins une différence de paramètres de quantification par rapport à une région spatiale prédéfinie précédant la région spatiale prédéfinie donnée.

4. Procédé selon l'une quelconque des revendications 1 à 3, le signal ou les signaux d'indices de transcodage comprenant une pluralité d'indices incluant l'indice ou les indices d'instructions de transcodage, et chaque indice de la pluralité d'indices étant associé à une trame du flux vidéo dans la qualité de référence ; et le procédé comprenant l'utilisation de la pluralité d'indices afin de reconstituer la ou les trames associées respectives.

5. Procédé selon l'une quelconque des revendications 1 à 4, comprenant :
- la mise à l'échelle du flux vidéo décodé reçu avant de le coder.

6. Transcodeur destiné à transcoder un flux vidéo codé dans une qualité de référence vers au moins une autre qualité, le transcodeur comprenant :
- une première borne d'entrée configurée pour recevoir le flux vidéo dans la qualité de référence ;
- une deuxième borne d'entrée configurée pour recevoir au moins un signal d'indice de transcodage correspondant respectivement à l'autre ou aux autres qualités comprenant : au moins un indice d'instruction de transcodage servant à adapter une technique de recherche de prédiction pour coder le flux vidéo dans l'autre ou les autres qualités ; et au moins un coût de complexité respectivement associé de la réalisation de la technique adaptée considérée de recherche de prédiction ;
- un analyseur configuré pour extraire, du signal ou des signaux d'indices de transcodage, l'indice ou les indices d'instructions de transcodage et le ou les coûts de complexité respectivement associés en analysant des informations contenues dans le signal ou les signaux d'indices de transcodage ;
- un décodeur configuré pour décoder le flux vidéo reçu ; et
- un codeur configuré pour coder le flux vidéo décodé dans l'autre ou les autres qualités, compte tenu de l'indice ou des indices extraits d'instructions de transcodage et du ou des coûts de complexité associés ; et **caractérisé en ce que**
le signal ou les signaux d'indices de transcodage comprennent au moins un indice de traduction de données de prédiction servant à traduire des données de prédiction du flux vidéo dans la qualité de référence vers l'autre ou les autres qualités, l'indice de traduction de données de prédiction comprenant une séquence de bits indiquant des données de prédiction d'une région spatiale prédéfinie du flux vidéo dans la qualité de référence ; et le transcodeur étant en outre configuré pour traduire les données de prédiction indiquées de la région spatiale prédéfinie du flux vidéo dans la qualité de référence vers l'autre ou les autres qualités d'après l'indice ou les indices de traduction de données de prédiction, l'indice ou les indices d'instructions de transcodage représentant un raffinement de la technique de recherche de prédiction en adaptant un espace de recherche de la technique de recherche de prédiction.

7. Transcodeur selon la revendication 6, le transcodeur étant en outre configuré pour prédire au moins une trame du flux vidéo dans l'autre ou les autres qualités en effectuant une recherche sur l'espace de recherche adapté de la technique de recherche de prédiction.

8. Transcodeur selon la revendication 7, le ou les coûts de complexité respectivement associés représentant une charge de calcul nécessaire pour coder le flux vidéo dans l'autre ou les autres qualités en utilisant l'espace de recherche adapté de la technique de recherche de prédiction.

9. Transcodeur selon l'une quelconque des revendications 6 à 8, le signal ou les signaux d'indices de transcodage comprenant au moins un indice de paramètre de quantification configuré pour spécifier un paramètre de quantification à utiliser par le codeur pour coder une région spatiale prédéfinie donnée du flux vidéo dans l'autre ou les autres qualités, de préférence en tant que différence de paramètres de quantification par rapport à une région spatiale prédéfinie précédant la région spatiale prédéfinie donnée ; et le transcodeur étant en outre configuré pour utiliser le paramètre de quantification ou la différence de paramètres de quantification spécifiés afin de coder la région spatiale prédéfinie donnée du flux vidéo dans l'autre ou les autres qualités ; et le ou les paramètres de quantification comprenant de préférence, pour une région spatiale prédéfinie donnée parmi la ou les régions spatiales prédéfinies, au moins une différence de paramètres de quantification par rapport à une région spatiale prédéfinie précédant la région spatiale prédéfinie donnée.

10. Transcodeur selon l'une quelconque des revendications 6 à 9, le signal ou les signaux d'indices de transcodage comprenant une pluralité d'indices incluant l'indice ou les indices d'instructions de transcodage, et chaque indice de la pluralité d'indices étant associé à une trame du flux vidéo dans la qualité de référence ; et le transcodeur étant en outre configuré pour utiliser la pluralité d'indices afin de reconstituer la ou les trames associées respectives.

11. Transcodeur selon l'une quelconque des revendications 6 à 10, comprenant :
- un moyen de mise à l'échelle configuré pour mettre à l'échelle le flux vidéo décodé reçu il est codé par le codeur.

12. Produit de programme informatique comprenant un programme exécutable par ordinateur d'instructions destinées à réaliser, lorsqu'elles sont exécutées sur un ordinateur, les étapes du procédé selon l'une quelconque des revendications 1 à 5.
